# EUROPÄISCHE PATENTSCHRIFT

(11) **EP 2 232 981 B1**
(45) Veröffentlichungstag und Bekanntmachung des Hinweises auf die Patenterteilung: **31.07.2013**
(21) Anmeldenummer: 10000751.7
(22) Anmeldetag: 26.01.2010
(51) Int. Cl.: A01F 15/08, A01F 15/10

(54) **Landwirtschaftliche Ballenpresse**
Agricultural baling press
Presse à balles agricole

(30) Priorität: 19.03.2009 DE 102009013473
(43) Veröffentlichungstag der Anmeldung: 29.09.2010
(73) Patentinhaber: Usines CLAAS France S.A.S., 57148 St. Rémy/Woippy CEDEX (FR)
(72) Erfinder: Hesselmann, Ulrich, 66706 Perl (DE); Scharf, Thorsten, 66693 Orscholz (DE); Füchtling, Christian, 59387 Ascheberg (DE)

(56) Entgegenhaltungen:
- EP-A1- 1 606 992
- EP-A1- 1 618 780
- DE-A1- 10 343 386
- DE-A1- 10 360 598
- DE-B1- 2 759 533

## Beschreibung

Die Erfindung betrifft eine landwirtschaftliche Großballenpresse gemäß dem Oberbegriff des Anspruchs 1.

Solche Großballenpressen dienen zur Erzeugung von quaderförmigen Ballen aus landwirtschaftlichem Erntegut wie Stroh, Heu, oder angewelketem Grüngut und nachwachsenden Rohstoffen. Derartige Großballenpressen bestehen im Wesentlichen aus einer Aufnahmetrommel zur Aufnahme des Erntegutes vom Ernteboden, an die sich ein Schneidrotor mit einem nachgeordneten Förderrechen anschließt, so dass dadurch das Erntegut einem Presskanal mit einem hin und her bewegbaren Presskolben zugeführt werden kann.

Bevor ein Ballen in einer landwirtschaftüchen Presse verdichtet wird, muss Erntegut dem Pressraum zugeführt werden. Übticherweise erfolgt dies, indem frontseitig an der Ballenpresse eine Pickup Trommel angeordnet ist, die das zu einem Schwad auf dem Boden abgelegte Erntegut aufnimmt. Nach der Aufnahme wird das Erntegut an unterschiedliche Arbeitsaggregat® übergeben und von diesem bearbeitet, bevor es in den Zuführkanal gelangt und von einem Rafferzinken durch mehrere Verdichtungshübe vorverdichtet wird. Im Anschluss hieran erfolgt durch den Rafferzinken ein Ladehub, der das Erntegut in den Pressraum befördert, in dem das Erntegut zu einem Ballen verdichtet wird.

Die DE 27 59 533 C3 offenbart eine landwirtschaftliche Ballenpresse, der eine Vorverdichtungseinrichtung zugeordnet Ist, die die Aufgabe hat, das Erntegut in dem Zuführkanal vorzuverdichten, bevor es die Ballenpresskammer zugeführt wird. Auf diese Weise soll eine kompakte und gleichmäßige Ballenpressung erreicht werden. Demgemäß Ist ein rotierender Packer unmittelbar vor dem Zuführkanal angeordnet, der das Erntegut mit hoher Geschwindigkeit In den hinteren Bereich des Zuführkanals fördert und durch die beschleunigte Zuführung das Erntegut vorverdichtet. Zur Unterstützung der Vorverdichtung ist dem endseitigen Bereich des Zuführkanals eine Abfühlvorrichtung zugeordnet, welche den Zuführkanal durchsetzt. Diese Abfühlvorrichtung ist aus Abfühlplatten zusammengesetzt, die die Ansammlung des Erntegutes in dem Zuführkanal und die Kraft mit der das Erntegut gegen die Abfühlplatte drückt, aufnimmt. Nimmt die Erntegutmenge innerhalb des Zuführkanals zu, so schwenkt die Abfühlvorrichtung aus dem Zuführkanal heraus. Hierdurch wird eine Kupplung betätigt, die die Bewegung des vor der Ballenöffnung stehenden Presskolbens einleitet, so dass die Ballenöffnung freigegeben wird. Die Kupplung löst zudem synchron hierzu einen Ladehub durch einen Rafferzinken aus, durch den das gesamte Erntegut aus der Zuführkammer in die Presskammer gefördert wird.

Nachteilig an dieser Vorrichtung Ist, dass bei uneinheltlich zugeführten Erntegutmengen eine einseitige Ansammlung von Erntegut innerhalb des Zuführkanals erfolgt. Diese einseitige Ansammlung wirkt nun auf die Abfühlvorrichtung gleichermaßen wie eine über die gesamte Breite des Zuführkanals gleichmäßig verdichtete Erntegutmenge. Dies hat unter Umständen zur Folge, dass durch eine starke Verdichtung des Ernteguts in nur einem Teilbereich des Zuführkanals bereits ein so starker Druck auf die Abfühlvorrichtung ausgeübt wird, dass die Abfühlvorrichtung aus dem Zuführkanal herausgeschwenkt und ein Ladehub ausgeführt wird. Dies hat eine uneinheitliche Pressung des Ballens zur Folge, welches bis zum Auseinanderfallett des Ballens führen kann.

Aus der DE 103 43 386 A1 ist eine Ballenpresse bekannt, die einen Zuführkanal mit einer Zuführeinrichtung zur Förderung und Verdichtung von aufgenommenen Gut in dem Zuführkanal und zum Einbringen des vorverdichteten Erntegutes in den Pressraum aufweist. An einer vorderen unteren Stelle des Zuführkanals Ist eine federbelastete Klappe bzw. ein Mittel schwenkbar montiert, das in Abhängigkeit von sich in dem Zuführkanal befindlichem Erntegut verschwenkbar ist und anzeigt, dass eine gewünschte Pressgutdichte In dem Zuführkanal erreicht ist. In diesem Fall erfolgt die Zuführung des Erntegutes In den Pressraum. Nachteil dieser Ausführung ist die auftretende Trägheit dieses Systems. Im Fall von hohen Erntegutdurchsätzen kann es vorkommen, dass bereits soviel Erntegut im Zuführkanal kanal vorhanden, dass mit dem nächsten Rafferhub ein Ladehub vollzogen werden müsste, die Sensorelnriohtung dies jedoch erst signalisiert, wenn der Rafferhub erfolgt ist, so dass es dann zu einer Verstopfung des Zuführkanals kommt, dessen Beseitigung sehr zeitaufwendig ist.

Aus der DE 103 60 598 A1 ist ebenfalls eine Ballenpresse mit quaderförmigem Pressraum bekannt, in dem ein Presskolben beweglich aufgenommen wird Die Presse weist einen Zuführkanal und einen Raffer auf, welcher das angenommene Erntegut vorverdichtet und in den Ballenpressraum einbringt. Eine über die Breite des Zuführkanals, quer zur Fahrtrichtung verlaufende Welle mit mehreren daran angebrachten Sensoren dient zur Erfassung der Erntegutdichte über die Breite des Zuführkanals auf Höhe der Welle.

Der Erfindung liegt die Aufgabe zugrunde, durch Schaff einer einheitlicheren Vorverdichtung Innerhalb des Zuführkanals_auch bei unterschiedlichen Erntegutdurchsätzen eine optimierte Erntegutzufuhr in den Ballenpressraum zu gewährleisten.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem die Im Zuführkanal angeordnete Sensoreinheit aus wenigstens zwei, jeweils über die Breite des Zuführkanals angeordneten Sensoren besteht, ist auch bei unterschiedlichen Erntagutdurchsätzen eine optimierte Vorverdichtung des dem Zuführkanal zugeführten Erntegutes gewährleistet. Damit wird sichergestellt, dass der Pressraum dauerhaft mit einer einheitlichen Erntegutmenge befüllt wird, was zu einer homogenen Ballenprossung führt. Dabei ist ein Sensor am eingangseitigen Ende des Zuführkanals und der weitere Sensor der Sensoreinheit am ausgangsseitigen Ende des Zuführkanals angeordnet, so dass nicht nur über die Breite des Zuführkanals sondern auch über die gesamte Länge des Zuführkanals die Verdichtung des zugeführten Erntegutes ermittelt werden kann. Um eine einheitliche Vorverdichtung des zugeführten Erntegutes innerhalb des Zuführkanals zu erreichen, führen die Rafferzinken in Abhängigkeit von den auf den Sensoren wirkenden Vordichtungskräften unterschiedliche Verdichtungshübe aus. Bis der definierbare Verdichtungswert erreicht wird, wird das Erntagut vorverdichtet. Nach Überschrelten des definierbaren Verdichtungswertes wird von den Rafferzinken ein Ladehub zur Befüllung des Bailenpressraums durchgeführt.

Dadurch, dass wenigstens ein Sensor der Sensoreinheit in der Längsrichtung lageveränderbar ist, kann vorteilhaft die optimale Position der Sensoren eingestellt werden, damit angepasst an unterschiedliche Erntegutdurchsätze eine optimale Vorverdichtung des zum Zuführkanal zugeführten Erntegutes gewährleistet ist, so dass stets ausreichend Emtgut über die Rafferzinken in den Pressraum der Ballenpresse verbracht werden. Denkbar ist, dass die Lageveränderung des wenigstens einen Sensors manuell und/oder automatisch erfolgt.

In einer vorteilhaften Weiterbildung der Erfindung umfassen die wenigstens zwei Sensoren der Sensoreinheit jeweils eine Sensorwelle auf der drehfest in Zuführkanal hineinragende Verschwenkelemente angeordnet sind, so dass an der jeweiligen Position des Sensors über die gesamte Breite des Zuführkanals die Verdichtung des Erntegutes sensiert werden kann.

Indem die ermittelten Verdichtungswerte auf einer Bedlen- und Anzeigeneinheit, die vorzugsweise in der Fahrerkabine eines die Ballenpresse ziehendes Schlepperfahrzeug angeordnet ist, zur Anzeige gebracht werden, erhält der Fahrer permanent den aktuellen Verdichtungsgrad über die Breite und Länge des Zuführkanals, so dass er, falls der Verdichtungsgrad nicht optimal ist, entsprechende Maßnahmen einleiten kann,

In einer vorteilhaften Ausgestaltung der Erfindung gibt der obere am ausgangsseitigen Ende des Zuführkanals angeordnete Sensor in Abhängigkeit von dem auf den Sensoren der Sensoreinheit wirkenden Verdichtungskräfte das vorverdichtete Erntegut frei, so dass wenn einer und/oder beide Sensoren einen definierbaren

Schwellwert überschritten haben, die für eine ausreichende Verdichtung und Befüllung des Zuführkanals stehen, der Ladehub durch die Rafferzinken zur Befüllung des Pressraumes erfolgen kann.

Besonders vorteilhaft erweist es sich, wenn die von den wenigstens zwei Sensoren der Sensoreinheit generierten Signale einer Steuer- und Auswerteeinheit zugeführt und verarbeitet werden und die Steuer- und Auswerteeinhelt von den sensierten Signalen wenigstens eine Funktion der Ballenpresse und/oder eines mit der Ballenpresse verbundenen Zugfahrzeuges, insbesondere die Bewegung der Rafferzinken zwischen einen Verdichtungshub und einem Ladehub steuert und/oder regelt, so dass solange die definierbare Verdichtung des Erntegutes Im Zuführkanal noch nicht erreicht ist, von den Rafferzinken Verdlchturigshübe ausgeführt werden und sobald die Sensoren eine ausreichende Verdichtung des Erntegutes am eingangsseitigen wie auch am ausgangsseitigen Ende des Zuführkanals sensieren, die Rafferzinken einen Ladehub vollziehen.

Um eine optimale Vorverdichtung des Erntegutes im Zuführkanal zu erreichen, kann vorteilhaft die Empfindlichkeit der wenigstens zwei Sensoren der Sensoreinheit mittels einer Bedienvorrichtung eingestellt werden, so dass je nach Schwadengröße und Erntegutdurchsatz, eine optimale Vorverdichtung Im Zuführkanal realisierbar ist. Vorzugsweise befindet sich die Bedienvorrichtung in der Fahrerkabine eines die Ballenpresse ziehenden Schlepperfahrzeuges, damit der Fahrer auf einfache Weise und ohne die Fahrerkabine verlassen zu müssen, die Einstellung der Sensoren vornehmen kann.

Um eine möglichst optimale Einstellung der Empfindlichkeit der wenigstens zwei Sensoren der Sensoreinheit zu erreichen, basiert die Einstellung der Werte vorteilhaft auf Expertenwissen, so dass stets eine optimale Vorverdichtung des Erntegutes im Zuführkanals erreichbar ist.

Weitere vorteilhafte Ausgestaltungen sind Gegenstand weiterer Unteransprüche und werden nachfolgend anhand einer Zeichnung näher erläutert.

### Es zeigt:

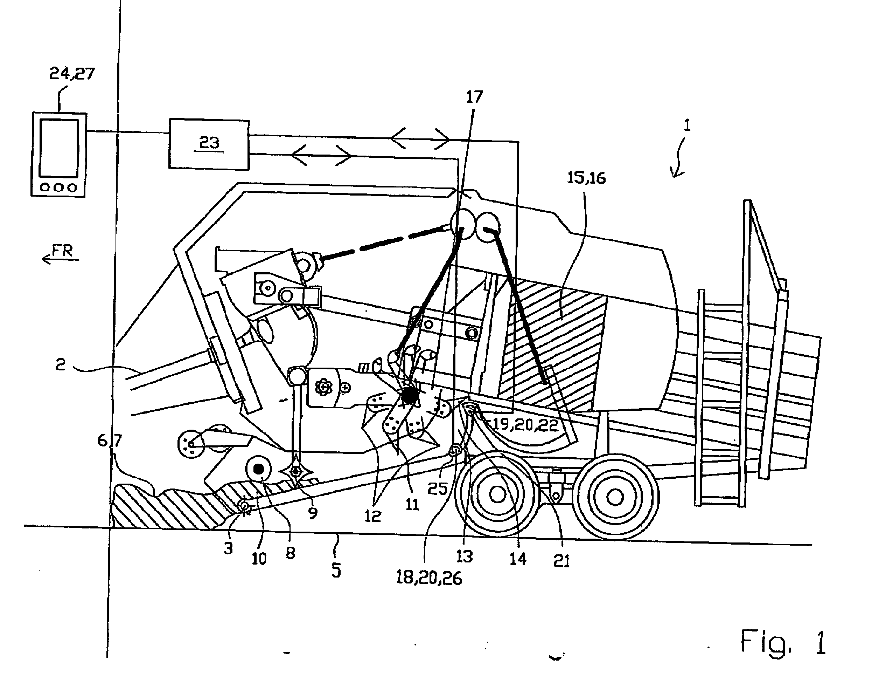

- Figur 1:: eine schematische Seitenansicht einer Ballenpresse mit der im Zuführkanal angeordneten erfindungsgemäßen Sensoreinheit

Fig. 1 zeigt eine schematische Darstellung einer landwirtschaftlichen Ballenpresse 1 in der Art einer Großballenprossen zum Herstellen von quaderförmigen Ballen in der Seitenansicht, die von einem nicht dargestellten Zugfahrzeug, wie beispielsweise einem Ackerschlepper, gezogen und die Antriebs- und Funktionsvorrichtungen über eine Zapfwelle 2 angetrieben werden.,

Frontseitig und in Fahrtrichtung FR des der Ballenpresse 1 eine Pickup Trommel 3 zugeordnet. Die im Uhrzeigersinn gemäß Pfeilrichtung umlaufende Pickup Trommel 3 ist mit Förderzinken 4 bestückt, die das zuvor geerntete und auf dem Feldboden 5, in der Regel zum Schwaden 6 abgelegte Erntegut 7, aufnehmen. Das aufgenommene Erntegut 7 wird von der Pickup Trommel 3 nachgeordneten Erntegutförderorganen, welche im Ausführungsbeispiel als Fördertrommel 8 ausgeführt ist, zugeführt. In dem rückwärtigen Bereich ist der Fördertrommel 8 eine Schneid- und Fördereinrichtung 9 zugeordnet, die die aus dem Förderkanal 10 austretende Erntegutmatte unterschlächtig weiterfördert. Die Schneld- und Fördereinrichtung 9 übergibt das Erntegut 7 an die Rafferzinken 11, deren Aufgabe es ist, das zugeführte und zerkleinerte Erntegut 7 durch Verdichtungshübe 12 im Zuführkanal 13 vorzuverdichten und mit einem Ladehub 14 an den Pressraum 15 der Ballenpresse 1 zu übergeben. In dem Pressraum 15 wird das Erntegut 7 in an sich bekannter und daher nicht näher beschriebene Weise zu einem fertigen Ballen 16 verdichtet, gebunden und aus der Ballenpresse 1 gefördert.

Um das Erntegut 7 optimal vorverdichtet dem Pressraum 15 der Ballenpresse 1 zuzuführen, durchlaufen die Rafferzinken 11 unterschiedliche Bewegungsbahnen. Entscheidend ist hierbei, dass das zerkleinerte Erntegut 7 den Zuführkanal 13 gleichmäßig dicht ausfüllt, bevor es durch einen Ladehub 14 von den Rafferzinken 11 durch die Öffnung 17 dem Pressraum 15 zugeführt wird. Um eine gleichmäßige und dichte Befüllung des Zuführkanals 13 zu gewährleisten, wird das Erntegut 7 durch unterschiedliche, den Bewegungsbahnen entsprechende Verdichtungshübe 12 vorverdichtet. Die Länge des Zuführkanals 13 entspricht dabei in etwa der Höhe des im Pressraum 15 zu pressenden Ballens 16. Bei im Stand der Technik bekannten Pressen, die am unteren einlassseltigen Ende des Zuführkanals 13 eine Sensoreinrichtung zur Ermittlung der im Erntegutkanal erfolgten Vorverdichtung des Erntegut 7 aufweisen und am oberen der Presskammer zugewandten Seite eine Verschlussvorrichtung aufweisen, kann es insbesondere bei großen Schwaden und damit einhergehenden großen Erntegutdurchsätzen aufgrund der Träghelt des Systems zu Verstopfungen Im Zuführkanal kommen, dadurch bedingt, dass der Zuführkanal bereits bis nahe der Sensoreinrichtung mit Erntegut befüllt ist, jedoch von der Sensoreinrichtung erst mit einem weiteren Verdichtungshub, dass Auslösesignal für einen Ladehub generlert wird. Im Zuführkanal ist jedoch nicht mehr ausreichend Platz, um dass durch den weiteren Verdichtungshub zugeführte Erntegut aufzunehmen. Eine Verstopfung, die sehr zeitaufwendig zu beseitigen ist, Ist häufig die Folge.

Hier setzt nun die Erfindung ein, die Innerhalb des Zuführkanals 13 eine zwei Sensoren 18, 19 umfassende Sensoreinheit 19 vorsieht. Der eine Sensor 19 der Sensoreinheit 20 befindet sich am ausgangsseitigen Ende des Zuführkanals 13. Der Sensor 19 umfasst eine Sensorwelle 21, auf welcher Verschwenkelemente 22 drehfest angeordnet sind. Die Sensorzelle 21 ist außerhalb des Zuführkanals 13 und quer zur Fahrtrichtung FR bzw. Gutflussrlchtung angeordnet. Während der Befüllung des Zuführkanals 13 mit Erntegut 7 ist die Sensorwelle 21 derart eingestellt, dass die Verschwenkelemente 22 den Zuführkanal 13 quer zur Fahrtrichtung FR durchsetzen. Durch die drehbare Lagerung der Sensorwelle 21 können die Verschwenkelemente 22 vollständig aus dem Zuführkanal 13 herausgeschwenkt werden. Das Herausschwenken erfolgt, sobald sich hinreichend viel Erntegut 7 vor den Verschwenkelementen 22 des Sensors 19 angesammelt hat und die unter Vorspannung stehenden Verschwenkelemente 22 von dem Erntegut 7 zumindest teilweise aus dem Zuführkanal 13 herausgedrückt werden. Durch das Herausschwenken wird das im Zuführkanal 13 vorverdichtete Erntegut 7 freigegeben, so dass die Rafferzinken 11 das Erntegut 7 durch einen Ladehub 14 dem Pressraum 15 zuführen können. Der Gegendruck der Verschwenkelemente 22, welcher vom vorverdichteten Erntegut 7 zu überwinden ist, um die Verschwenkelemente 22 aus dem Zuführkanal 13 herauszuverschwenken, wird mittels einer Steuer- und Auswerteeinrichtung 23 gesteuert und/oder geregelt. Die Einstellung der Empfindlichkeit erfolgt vorzugsweise mittels einer in der Fahrerkabine des nicht dargestellten Zugfahrzeuges angeordneten und mit der Steuer- und Auswerteeinheit 23 in Wirkverbindung stehenden Bedienvorrichtung 24. Ein zweiter Sensor 18 der Sensoreinheit 20 befindet sich am unteren einlassseitigen Ende des Zuführkanals 13.

Dieser Sensor 18 umfasst eine Sensorwelle 25, auf welcher gleichfalls in den Zuführkanal 13 hineinragende Verschwenkelemente 26 angeordnet sind. Die Verschwenkelemente 26 sind entsprechend der Verschwenkelemente 22 aus dem Zuführkanal 13 herausschwenkbar. Zur Ermittlung des am eingangsseitigen Ende des Zuführkanals 13 zugeführten Erntegutes 7 ragen die Verschwenkelemente 26 vorgespannt In den Zuführkanal 13 hinein. Da diese Verschwenkelemente 26 nicht zum Sperren des vorverdichteten Erntegutes 7 dienen, ragen sie weniger weit in den Zuführkanal 13 hinein als die Verschwenkelemente 22 des oberen Sensors 19. Der zweite Sensor 18 steht gleichfalls mit der Steuer- und Auswerteeinheit 23 in Wirkverbindung. Zur Einstellung der Empfindlichkeit der Vorspannung des zweiten Sensors 18 erfolgt gleichfalls über eine mit der Steuer- und Auswerteelnrichtung 22 In Verbindung stehende Bedienvorrichtung 23.

Durch die unterschiedlichen, den Bewegungsbahnen entsprechenden Hübe 12, 14 der Rafferzinken 11, wird das Erntegut 7 einerseits über die Verschwenkelemente 26 des am eingangsseitigen Ende des Zuführkanals 13 positionierten Sensors 18 befördert und an die das Erntegut 7 sperrenden Verschwenkelemente 22 herangeführt. Durch jeden nachfolgenden Verdichtungshub 12 baut sich mehr Erntegut 7 innerhalb des Zuführkanals 13 auf, bis dieser schließlich über die Breite und Länge gefüllt ist. Die Befüllung und Verdichtung des Erntegutes 7 im Zuführkanal 13 erfolgt somit unmlttelbar vor den Verschwenkelementen 22 des oberen Sensors 19 und setzt sich entgegen der Emtegutzuführrichtung fort. Die gleichmäßige und homogene Verdichtung des Erntegutes 7 innerhalb des Zuführkanals 13 ist ausschlaggebend für die Form des im Pressraum 15 zu pressenden Ballens 16. Wird zu wenig Erntegut 7 dem Pressraum 15 zugeführt, hat dies nachhaltige Auswlrkungen auf die Ballenform, insbesondere wenn ungleirhmäßige oder zu geringe Mengen im Zuführkanal 13 vorverdichtet werden. Dementsprechend muss der Zuführkanal 13 mit einer Menge an Erntegut 7 gefüllt sein, die mit der für eine optimale Pressung notwendige Menge an Erntegut 7 korrespondiert,

Wie bereits erwähnt, hängt die im Zuführkanal 13 befindliche Erntegutmenge von der eingezogenen Menge an Erntegut 7 ab. Diese Menge wird in der Regel durch die auf dem Feldboden 5 liegende Schwadengröße bestimmt. Problematisch ist insbesondere, dass die Vorverdichtung im Zuführkanal aufgrund der Schwadengröße und dem damit korrespondierenden Erntegutdurchsatz schneller oder langsamer voranschreitet. Bei großen Schwadengrößen, die einen hohen Erntegutdurchsatz bedeuten reicht es häufig aus, dass von den Rafferzinken 11 nur ein Verdichtungshub 12 erfolgt, wobei die nächste Bewegung der Rafferzinken 11 bereits der Ladehub 14 erfolgt, damit es nicht zu einer Verstopfung des Zuführkanals 13 kommt. Andererseits sind bei kleinen Schwadengrößen mehrere Verdichtungshübe 12 notwendig, um eine ausreichende Befüllung des Zuführkanals 13 zu erreichen, so dass nach einer Anzahl von Verdichtungshüben 12 die Rafferzinken 11 einen Ladehub 14 vollziehen. Im Fall, dass kleine Schwadengrößen von der Ballenpresse 1 aufgenommen werden, wird die Empfindlichkeit des am eingangsseitigen Ende des Zuführkanals 13 angeordneten Sensors 18 sehr niedrig eingestellt, so dass das aufgrund der kleinen Schwadengröße in einer geringeren Menge zugeführte Erntegut 7 über den Sensor 18 befördert worden kann, ohne dass er aus dem Zuführkanal 13 herausgedrückt wird und ein Signal abgibt. Das Erntegut 7 wird bis zu den sperrenden Verschwenkeiamenten 22 des am ausgarigrseitigen Ende des Zuführkanals 13 angeordneten Sensors 19 weiterbefördert. Die Verschwenkelemente 22 des oberen Sensors 19 sperren das Erntegut 7 solange, bis die vom vorverdichteten Erntegut 7 gegen die Verschwenkelemente 22 aufgebrachte Druckkraft einen vorab definierten Schwellwert des Sensors 19 überschreitet und die Verschwenkelemente 22 aus dem Zuführkanal 13 herausschwenken und das Erntegut 7 freigeben. Gleichzeitig übermittelt der Sensor 19 ein Signal an die Steuer- und Auswerteeinheit 23, die dann entsprechend ein Signal generiert, dass die Rafferzinken 91 mittels eines Ladehubs 14 das im Zuführkanal 13 vorverdichtete Erntegut 7 in den Pressraum 15 der Ballenpresse 1 befördern. Bei großen Schwadengrößen wird die Empfindlichkeit, d.h. die Vorspannung des unteren Sensors 18 sehr gering eingestellt, so dass, wenn mit einem Verdichtungshub 12 der Rafferzinken 11 bereits eine solche Menge an Erntegut 7 dem Zuführkanal 13 zugeführt wird, die Verschwenkelemente 26 des unteren Sensors 18 zurückgedrückt und ein entsprechendes Signal an die Steuer- und Auswerteeinrichtung 23 geleitet wird, die wiederum ein entsprechendes Signal generiert, dass die Rafferzinken 11 mit der nächsten Bewegung einen Ladehub 14 ausführen, so dass vorteilhaft eine optimale Vorverdichtung im Zuführkanal realisierbar ist und Verstopfungen vermeldbar sind. In einer vorteilhaften Ausgestaltung werden die auf die Sensoren 18, 19 einwirkenden Kräfte des vorverdichteten Erntegutes 7 auf einer Bedien- Anzeigeneinheit 27 zur Anzeige gebracht. Vorzugsweise ist die Bedlen- und Anzeigeneinheit 27 In der Fahrkabine eines hier nicht dargestellten Schlepperfahrzeuges angeordnet, welches die Ballenpresse 1 im Erntebetrieb zieht. So erhält der Fahrer permanent den aktuellen Verdichtungsgrad über die Breite und Länge des Zuführkanals 13, so dass er, falls der Verdichtungsgrad nicht optimal ist, entsprechende Maßnahmen einleiten kann,

Die Einstellung der Empfindlichkeit der Sensoren 17, 18 der Sensoreinheit 19 baslert vorteilhaft auf Expertenwissen, so dass eine optimal vorverdichtete Befüllung des Zuführkanals 13 mit Erntegut auch bei unterschiedlichen Schwadengrößen erfolgen kann.

In einer hier nicht dargestellten Ausführung, ist es denkbar, dass wenigstens ein Sensor 18, 18 der Sensoreinheit 20 in der Längsrichtung innerhalb des Zuführkanals 13 lageveränderbar ist, so dass die optimale Position der Sensoren 18, 19 eingestellt werden kann, damit angepasst an unterschiedliche Erntegutdurchsätze eine optimale Vorverdichtung des dem Zuführkanal 13 zugeführten Erntegutes 7 gewährleistet ist, so dass stets ausreichend Erntgut 7 über die Rafferzinken 11 in den Pressraum 15 der Ballenpresse 1 verbracht werden kann, um eine homogene Ballenpressung zu erreichen. Dabei kann die Lageveränderung des wenigstens einen Sensors 18, 19 manuell und/oder automatisch erfolgen.

Es liegt im Rahmen des Könnens eines Fachmanns das beschriebene Ausführungsbeispiel in nicht dargestellter Weise abzuwandeln, um die beschriebenen Effekte zu erzielen, ohne dabei den Rahmen der Erfindung zu verlassen, Insbesondere kann es Anwendung finden auf einer selbstfahrenden Ballenpresse.

### Bezugszelchenliste:

- 1: Landwirtschaftliche Ballenpresse
- 2: Zapfwelle
- 3: Pickup Trommel
- 4: Förderzinken
- 5: Feldboden
- 6: Schwaden
- 7: Erntegut
- 8: Fördertrommel
- 9: Schneid- und Fördereinrichtung
- 10: Förderkanal
- 11: Rafferzinken
- 12: Verdichtungshub
- 13: Zuführkanal
- 14: Ladehub
- 15: Pressraum
- 16: Ballen
- 17: Öffnung
- 18: Sensor
- 19: Sensor
- 20: Sensoreinheit
- 21: Sensorwelle
- 22: Verschwenkelemente
- 23: Steuer- und Auswerteeinrichtung
- 24: Bedienvorrichtung
- 25: Sensorwelle
- 26: Verschwenkelemente
- 27: Bedien- und Anzeigeneinhelt

## Patentansprüche

1. Landwirtschaftliche Ballenpresse (1) mit einem quaderförmigen Ballenpressraum (15), in dem ein Presskolben beweglich aufgenommen wird, mit einem Zuführkanal (13) und mit einem Raffer (11), welcher das angenommene Erntegut (7) vorverdichtet und in den Ballenpressraum (15) einbringt, sowie einer über die Breite des Zuführkanals (13) angeordneten Sensoreinheit (20) zur Erfassung der Erntegutdichte,
**dadurch gekennzeichnet, dass**
die Sensoreinheit (20) aus wenigstens zwei, jeweils über die Breite des Zuführkanals (13) angeordneten Sensoren (18, 19) besteht, wöbei ein Sensor (18) der Sensoreinheit (20) am eingangsseitigen Ende des Zuführkanals (13) und ein weiterer Sensor (19) der Sensoreinheit (20) am ausgangsseitigen Ende des Zuführkanals (13) angeordnet ist.

2. Landwirtschaftliche. Ballenpresse nach Anspruch 1
**dadurch gekennzeichnet, dass**
wenigstens ein Sensor (18,19) der Sensoreinheit (20) in der Längsrichtung des Zuführkanals (13) lageveränderbar ist.

3. Landwirtschaftliche Ballenpresse nach Anspruch 2,
**dadurch gekennzeichnet, dass**
die Lageveränderung des wenigstens einen Sensors (18, 19) manuell und/oder automatisch erfolgt.

4. Landwirtschaftliche Ballenpresse nach einem der vorhergehenden Ansprüche,
**dadurch gekennzeichnet, dass**
wenigstens ein Sensor (18, 19) der Sensoreinheit (20) die Bewegung des In den Zuführkanal (13) geförderten Erntegutes (7) sperrt oder freigibt.

5. Landwirtschaftliche Ballenpresse nach einem der vorhergehenden Ansprüche,
**dadurch gekennzeichnet, dass**
die Sensoren (18, 19) der Sensoreinheit (20) jeweils eine Gensorwelle (21, 25) umfassen auf der drehfest In den Zuführkanal (13) hineinragende Verschwenkelemente (22, 26) angeordnet sind.

6. Landwirtschaftliche Ballenpresse nach einem der vorhergehenden Ansprüche,
dadurch gekenntzeichnet, dass
die wenigstens zwei im Zuführkanal (13) angeordneten Sensoren (18, 19) der Sensoreinheit (20) ausgebildet sind, die Erntegutdichte und/oder den Erntegutdurchsatz über die Breite des Zuführkanals (13) zu sensieren.

7. Landwirtschaftliche Ballenpresse nach einem der vorhergehenden Ansprüche,
**dadurch gekennzeichnet, dass**
die von den Sensoren (18, 19) ermittelten Verdichtungswerte auf einer Bedien- und Anzeigeeinheit (27) zur Anzeige gebracht werden.

8. Landwirtschaftliche Ballenpresse nach einem der Anspruchche 4 bis 7,
**dadurch gekennzeichnet, dass**
der obere am ausgangsseitigen Ende des Zuführkanals (13) angeordnete Sensor (19) das zugeführte Erntegut (7) in Abhängigkeit von den auf den Sensoren (18, 19) der Sensorelnhelt (20) wirkenden Verdichturigskräfte freigibt.

9. Landwirtschaftliche Ballenpresse nach einem der vorhergehenden Ansprüche,
**dadurch gekennzeichnet, dass**
die von dem oberen und von dem unteren im Zuführkanal angeordneten Sensoren (18, 19) der Sensoreinheit (20) generierten Signale einer Steuer und Auswerteeinheit (23) zugeführt und verarbeitet werden.

10. Landwirtschaftliche Ballenpresse nach Anspruch 9,
**dadurch gekennzeichnet dass**
die Steuer- und Auswerteeinhelt (23) In Abhängigkeit von den sensierten Signalen wenigstens eine Funktion der Ballenpresse (1) und/oder eines mit der Ballenpresse (1) verbundenen Zugfahrzeuges, insbesondere die Bewegung der Rafferzinken (11) zwischen einem Verdichtungshub (12) und einem Ladehub (14) steuert und/oder regelt.

11. Landwirtschaftliche Ballenpresse nach einem der vorhergehenden Ansprüche,
**dadurch gekennzeichnet, dass**
die Empfindlichkeit der wenigstens zwei Sensoren (18. 19) der im Zuführkanal (13) angeordneten Sensoreinheit (20) im Zuführkanal mittels einer Bedienvorrichtung (24) einstellbar ist.

12. Landwirtschaftliche Ballenpresse nach Anspruch 11,
**dadurch gekennzeichnet dass**
die Bedienvorrichtung (24) und/oder die Bedien- und Anzeigeeinheit (27) in der Fahrerkabine eines die Ballenpresse (1) ziehenden Schlepperfahrzeuges angeordnet ist.

## Claims

1. An agricultural bale press (1) having a cuboidal bale press chamber (15) in which a pressing piston is movably accommodated, a feed passage (13) and a compactor (11) which pre-compacts the picked-up crop material (7) and introduces it into the bale press chamber (15), and a sensor unit (20) arranged over the width of the feed passage (13) for detecting the crop material density,
**characterised in that**
the sensor unit (20) comprises at least two sensors (18, 19) respectively arranged over the width of the feed passage (13), wherein one sensor (18) of the sensor unit (20) is arranged at the entry end of the feed passage (13) and a further sensor (19) of the sensor unit (20) is arranged at the exit end of the feed passage (13).

2. An agricultural bale press according to claim 1 **characterised in that** at least one sensor (18, 19) of the sensor unit (20) is variable in position in the longitudinal direction of the feed passage (13).

3. An agricultural bale press according to claim 2 **characterised in that** the change in position of the at least one sensor (18, 19) is effected manually and/or automatically.

4. An agricultural bale press according to one of the preceding claims **characterised in that** at least one sensor (18, 19) of the sensor unit (20) blocks or enables the movement of the crop material (7) conveyed into the feed passage (13).

5. An agricultural bale press according to one of the preceding claims **characterised in that** the sensors (18, 19) of the sensor unit (20) respectively include a sensor shaft (21, 25) on which pivotal elements (22, 26) projecting into the feed passage (13) are non-rotatably arranged.

6. An agricultural bale press according to one of the preceding claims **characterised in that** the at least two sensors (18, 19) arranged in the feed passage (13) of the sensor nit (20) are adapted to sense the crop material density and/or the crop material throughput over the width of the feed passage (13).

7. An agricultural bale press according to one of the preceding claims **characterised in that** the compacting values ascertained by the sensors (18, 19) are displayed on an operating and display unit (27).

8. An agricultural bale press according to one of claims 4 to 7 **characterised in that** the upper sensor (19) arranged at the exit end of the feed passage (13) liberates the fed crop material (7) in dependence on the compacting forces acting on the sensors (18, 19) of the sensor unit (20).

9. An agricultural bale press according to one of the preceding claims **characterised in that** the signals generated by the upper and the lower sensors (18, 19) of the sensor unit (20), that are arranged in the feed passage, are fed to a control and evaluation unit (23) and processed.

10. An agricultural bale press according to claim 9 **characterised in that** in dependence on the sensed signals the control and evaluation unit (23) controls and/or regulates at least one function of the bale press (1) or a towing vehicle connected to the bale press (1), in particular the movement of the compactor tines (11) between a compacting stroke (12) and a loading stroke (14).

11. An agricultural bale press according to one of the preceding claims **characterised in that** the sensitivity of the at least two sensors (18, 19) of the sensor unit (20) disposed in the feed passage (13) is adjustable in the feed passage by means of an operating device (24).

12. An agricultural bale press according to claim 11 **characterised in that** the operating device (24) and/or the operating and display unit (27) is arranged in the driving cab of a tractor vehicle pulling the bale press (1).

## Revendications

1. Presse agricole à balles (1) comprenant une chambre parallélépipédique de pressage de balles (15) dans laquelle est disposé de manière mobile un piston de pressage, comprenant un canal d'alimentation (13) et un ameneur (11) qui précompresse le produit récolté chargé (7) et l'introduit dans la chambre de pressage de balles (15), et comprenant une unité de capteurs (20) disposée sur la largeur du canal d'alimentation (13) pour enregistrer la densité du produit récolté, **caractérisée en ce que** l'unité de capteurs (20) se compose d'au moins deux capteurs (18, 19) disposés sur la largeur du canal d'alimentation (13), un capteur (18) de l'unité de capteurs (20) étant disposé à l'extrémité côté entrée du canal d'alimentation (13), et un autre capteur (19) de l'unité de capteurs (20) étant disposé à l'extrémité côté sortie du canal d'alimentation (13).

2. Presse agricole à balles selon la revendication 1, **caractérisée en ce que** la position d'au moins un capteur (18, 19) de l'unité de capteurs (20) peut être modifiée dans la direction longitudinale du canal d'alimentation (23).

3. Presse agricole à balles selon la revendication 2, **caractérisée en ce que** la modification de position du au moins un capteur (18, 19) s'effectue manuellement et/ou automatiquement.

4. Presse agricole à balles selon une des revendications précédentes, **caractérisée en ce qu'**au moins un capteur (18, 19) de l'unité de capteurs (20) bloque ou autorise le déplacement du produit récolté amené dans le canal d'alimentation.

5. Presse agricole à balles selon une des revendications précédentes, **caractérisée en ce que** les capteurs (18, 19) de l'unité de capteurs (20) comprennent chacun un arbre de capteur (21, 25) sur lequel des éléments de pivotement (22, 26) pénétrant dans le canal d'alimentation (13) sont solidarisés en rotation.

6. Presse agricole à balles selon une des revendications précédentes, **caractérisée en ce que** les au moins deux capteurs (18, 19) de l'unité de capteurs (20) disposés dans le canal d'alimentation (13) sont conçus pour détecter la densité du produit récolté et/ou le débit de produit récolté sur la largeur du canal d'alimentation (13).

7. Presse agricole à balles selon une des revendications précédentes, **caractérisée en ce que** les valeurs de compression recueillies par les capteurs (18, 19) sont visualisées sur une unité de manoeuvre et d'affichage (27).

8. Presse agricole à balles selon une des revendications précédentes 4 à 7, **caractérisée en ce que** le capteur supérieur (19) disposé à l'extrémité côté sortie du canal d'alimentation (13) libère le produit récolté amené (7) en fonction des forces de compression agissant sur les capteurs (18, 19) de l'unité de capteurs (20) .

9. Presse agricole à balles selon une des revendications précédentes, **caractérisée en ce que** les signaux générés par les capteurs supérieur et inférieur (18, 19) de l'unité de capteurs (20) disposés dans le canal d'alimentation sont envoyés à une unité de commande et d'analyse (23) et traités.

10. Presse agricole à balles selon la revendication 9, **caractérisée en ce que**, en fonction des signaux détectés, l'unité de commande et d'analyse (23) commande et/ou régule au moins une fonction de la presse à balles (1) et/ou d'un véhicule tracteur relié à la presse à balles (1), en particulier le déplacement des dents d'ameneur (11) entre une course de compression (12) et une course de chargement (14).

11. Presse agricole à balles selon une des revendications précédentes, **caractérisée en ce que** la sensibilité des au moins deux capteurs (18, 19) de l'unité de capteurs (20) disposée dans le canal d'alimentation (13) est réglable au moyen d'un dispositif de manoeuvre (24).

12. Presse agricole à balles selon la revendication 11, **caractérisée en ce que** le dispositif de manoeuvre (24) et/ou l'unité de manoeuvre et d'affichage (27) sont disposés dans la cabine de conduite d'un véhicule tracteur tirant la presse à balles (1).
